# EUROPÄISCHE PATENTSCHRIFT

(11) **EP 0 315 847 B1**
(45) Veröffentlichungstag und Bekanntmachung des Hinweises auf die Patenterteilung: **07.01.1993**
(21) Anmeldenummer: 88118072.3
(22) Anmeldetag: 29.10.1988
(51) Int. Cl.: F16D 1/08

(54) **Hydraulisch beaufschlagbare Schrumpfscheibe, insbesondere für das kraftübertragende Verbinden einer Nabe mit einer Welle**
Hydraulically loaded clamping ring, in particular for the power transmitting connection of a hub to a shaft
Anneau de serrage pouvant être chargé hydrauliquement en particulier pour la transmission de couple entre un moyeu et un arbre

(30) Priorität: 10.11.1987 DE 3738138
(43) Veröffentlichungstag der Anmeldung: 17.05.1989
(73) Patentinhaber: TAS SCHÄFER GMBH TECHNIK FÜR ANTRIEB UND STEUERUNG, D-58293 Wetter-Wengern (DE)
(72) Erfinder: Miller, Wolfgang, D-5802 Wetter-Wengern (DE); Schäfer, Udo, D-5810 Witten-Bommern (DE)

(56) Entgegenhaltungen:
- DE-A- 3 707 716
- FR-A- 2 228 978

## Beschreibung

### Beschreibung

Die Erfindung betrifft eine hydraulisch beaufschlagbare Schrumpfscheibe für das kraftübertragende Verbinden einer Nabe mit einer Welle, mit einem auf einer zylindrischen Außenumfangsfläche der zu verspannenden Nabe angeordneten Innenring und zwei sich axial gegenüberliegenden, auf dem Innenring axial verschieb- und vespannbar geführten Druckringen, wobei der Innenring eine doppelkonische Außenumfangsfläche und die zwischen sich einen Druckraum für die Druckflüssigkeit einschließenden Druckringe innere Umfangsflächen aufweisen, die zu den Konusflächen des Innenrings korrespondierend ausgebildet sind.

Eine Schrumpfscheibe mit den vorgenannten Merkmalen ist durch die US-A-4 425 050 (Fig.1 und 2) bekannt. Bei dieser Schrumpfscheibe dient außer den beiden Druckringen eine ringförmige Schulter zum Bilden des Druckraumes, wobei diese Schulter an einem der Druckringe angeformt ist und einen Teilbereich der zylindrischen Außenumfangsfläche des anderen Druckringes übergreift. Der die ringförmige Schulter aufweisende Druckring enthält eine das Druckmittel direkt und unmittelbar in den Druckraum führende Zuleitung. Durch die ungleiche Gestaltung der Druckringe und die spezielle ringförmige Schulter ist das Herstellen der bekannten Schrumpfscheibe relativ aufwendig. Außerdem kann das Abdichten des Druckraumes im Bereich der ringförmigen Schulter Probleme bereiten. Weiter ist nicht auszuschließen, daß die mit den konischen Flächen des Innenringes zusammenwirkenden Druckringe auf diesen Flächen klemmen, wodurch das Verspannen der Schrumpfscheibe erschwert ist.

Der Erfindung liegt daher die Aufgabe zugrunde, eine hydraulisch beaufschlagbare Schrumpfscheibe der gattungsgemäßen Art so auszubilden, daß ein möglichst einfacher, für die Produktion günstiger Gesamtaufbau vorliegt, daß das hydraulische Verspannen der Druckringe leicht und gleichmäßig erzielbar ist und ein hohes Maß an Sicherheit für die kraftübertragende Verbindung erzielt wird.

Diese Aufgabe wird erfindungsgemäß dadurch gelöst, daß
a) die Druckringe im Querschnitt spiegelbildlich gleich und mit einer zylindrischen Außenumfangsfläche ausgebildet sind, als Druckmittelkanäle dienende Bohrungen aufweisen und innerhalb einer als Widerlager ausgelegten Spannscheibe geführt sind,
b) an der Außenumfangsfläche der Spannscheibe eine Anschlußbohrung für die Druckflüssigkeit vorgesehen ist, die sich an ihrem Bohrungsende innerhalb der Spannscheibe in zwei bezüglich einer Radialebene einen stumpfen Winkel bildende, innerhalb der Spannscheibe verlaufende und an der Innenumfangsfläche der Spannscheibe mündende Druckmittelkanäle teilt,
c) sich die Druckmittelkanäle der Druckringe von der Innenumfangsfläche bis zur Außenumfangsfläche der Druckringe erstrecken und gegenüber einer Radialebene einen Winkel bilden, der zu dem von den Kanälen in der Spannscheibe gebildeten Winkel entgegengesetzt gerichtet ist, wobei die Mündungsöffnungen der Druckmittelkanäle an der Außenumfangsfläche der Druckringe mit den Mündungsöffnungen der Druckmittelkanäle an der Innenumfangsfläche der Spannscheibe korrespondieren, und daß die Druckmittelkanäle die Druckflüssigkeit zu den inneren und äußeren Umfangsflächen der Druckringe und über diese in den Druckraum leiten.

Durch die FR-A-2 228 978 gehört eine Kupplung zum Verbinden von zwei fluchtenden Wellen zum Stand der Technik, bei der - abweichend von Gattung und Lösung des Erfindungsgegenstandes - innen konisch und außen zylindrisch, ansonsten spiegelbildlich gleich ausgebildete Innenringe auf konische Enden der beiden Wellen gepreßt werden, wobei diese Innenringe über zylindrische Außenflächen in einer als Widerlager dienenden Spannscheibe geführt sind. Die Spannscheibe hat an ihrer Außenumfangsfläche Bohrungen zum Einführen von Druckmittel in einen zwischen den Innenringen befindlichen Druckraum.

Bevorzugte Ausgestaltungen der Erfindung sind in den Unteransprüchen genannt.

Die erfindungsgemäße Schrumpfscheibe zeichnet sich durch ihre kompakte Bauweise und durch kurze Spannwege der beiden Druckringe aus. Weiter günstig sind alle Einzelteile der Schrumpfscheibe einfach zu bearbeiten und nach ihrer Montage durch die Spannscheibe zusammengehalten. Außerdem ist vorteilhaft, daß alle gegeneinanderliegenden Flächen bei dem Einführen von Druckmittel (Hydrauliköl) zugleich geschmiert werden, so daß ein Klemmen der Druckringe sicher vermieden wird und die Schrumpfscheibe stets mit voller Spannkraft arbeitet. Dabei ist der aufgebrachte hydraulische Druck stets direkt proportional zu der radialen Spannkraft, mit der die Schrumpfscheibe auf die Nabe preßt.

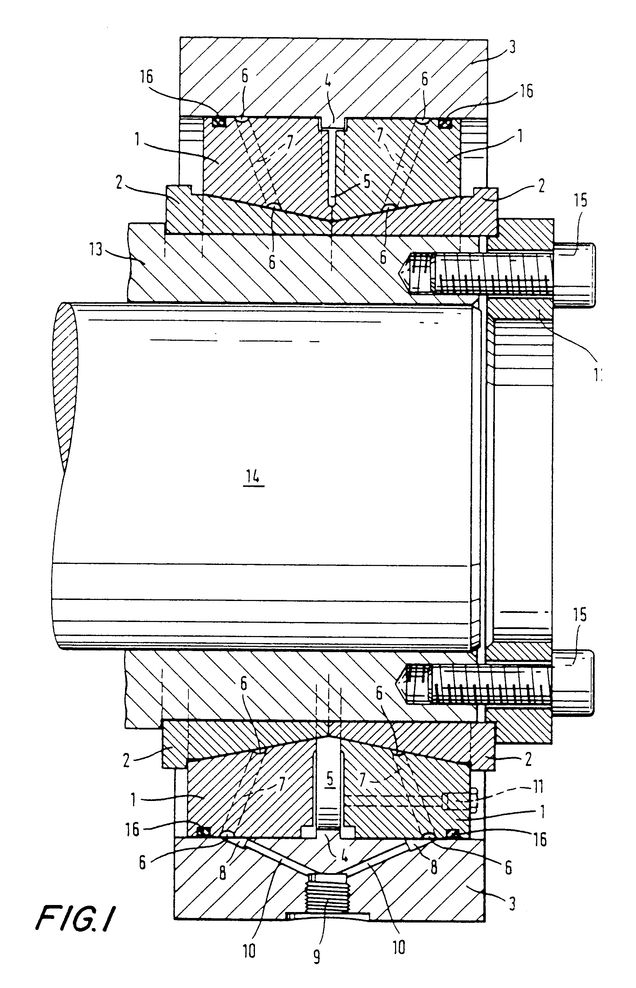

Ein Ausführungsbeispiel der Erfindung ist in der Zeichnung dargestellt und wird im folgenden näher beschrieben. Es zeigen
- Fig. 1: eine Welle 14, einen diese Welle konzentrisch umgebenden Teil einer Nabe 13 und eine Schrumpfscheibe, die in der oberen Hälfte der Zeichnung im ungespannten Zustand und in der unteren Hälfte im gespannten Zustand dargestellt ist, jeweils im Querschnitt,

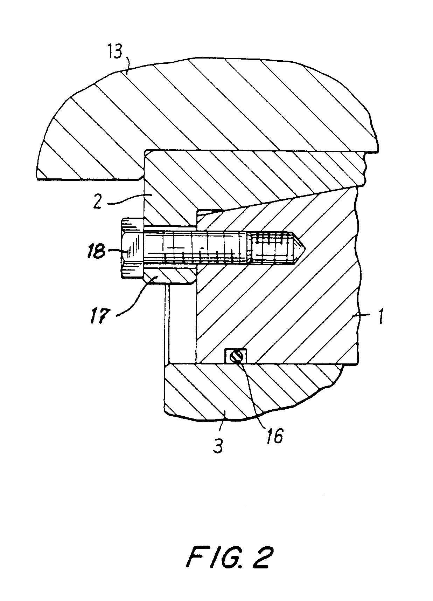

- Fig. 2: eine Einzelheit aus Fig. 1 im vergrößerten Maßstab.

Die zylindrische Außenfläche der Nabe 13 ist von einem innen zylindrischen, aus zwei Stücken gebildeten Innenring 2 umgeben, der eine doppelkonische Außenumfangsfläche hat. Mit dieser doppelkonischen Fläche wirken zwei Druckringe 1 zusammen, die jeweils an ihrer Innenumfangsfläche entsprechend konisch ausgebildet sind. Die an ihrer Außenumfangsfläche zylindrisch gestalteten Druckringe 1 sind an zylindrischen Umfangsflächen einer Spannscheibe 3 geführt, die beide Druckringe 1 umgibt. Die Spannscheibe 3 hat einen bundförmigen Zentriervorsprung 4, der zwischen die Druckringe 1 ragt und den Druckraum 5 nach außen begrenzt. In diesen Druckringen 1 befinden sich Nuten, in die O-Ringe 16 als zusätzliches Element zum Abdichten des Druckraumes (5) eingelegt sind.

Wie aus der unteren Hälfte der Zeichnung ersichtlich, ist in der Spannscheibe 3 eine Anschlußbohrung 9 für das Einlassen von Druckmittel vorgesehen, wobei in diese Bohrung 9 beispielsweise ein Anschlußventil eingesetzt werden kann. Die Anschlußbohrung 9 teilt sich innerhalb der Spannscheibe 3 in zwei Druckmittelkanäle 10, die in einem stumpfen Winkel zueinander verlaufen und an der zylindrischen Innenumfangsfläche der Spannscheibe 3 münden. Dort befindliche Übergänge 8 erweitern die Druckmittelkanäle 10 und dienen auch dem leichteren Ansetzen eines Bohrers bei der Herstellung, der sonst wegrutschen konnte. Die geneigten Druckmittelkanäle 10 sind im Anschluß und Übergang zu ebenfalls geneigt angeordneten Druckmittelkanälen 7 in den Druckringen 1 in ihrer Länge entsprechend dem Verschiebe- und Spannweg der Druckringe 1 bemessen. Die Druckmittelkanäle 7 in den Druckringen 1 sind an ihren Enden als Ringnuten 6 gestaltet.

Wird nun über die Anschlußbohrung 9 das Druckmittel eingeführt, so teilt sich der Strom dieser Hydraulikflüssigkeit in die Druckmittelkanäle 10 innerhalb der Spannscheibe 3. Durch diese Kanäle 10 fließt das Druckmittel zwischen die zylindrischen Umfangsflächen der Spannscheibe 3 der Druckringe 1 sowie in die Druckmittelkanäle 7 der Druckringe 1 und weiter zwischen die konischen Flächen der Druckringe 1 und des Innenringes 2 zum Druckraum 5 und beaufschlagt diesen.

Durch den hydraulischen Druck werden die Druckringe 1 aus ihrer in der oberen Zeichnungshälfte dargestellten Ausgangslage in die Spannstellung gemäß unterer Zeichnungshälfte gedrückt. Die Spannkraft der Druckringe 1 wird über den doppelkonischen Innenring 2 radial auf die Nabe 13 übertragen, wobei die Druckringe 1 und die Spannscheibe 3 stützend entgegenwirken.

Für das Lösen der Schrumpfscheibe weist einer der Druckringe 1 eine axiale Bohrung 11 auf, in die ein Ventil einsetzbar ist. Durch diese Bohrung 11 kann also Druckmittel abgelassen werden, so daß die nicht im Bereich der Selbsthemmung liegenden Konusflächen des Innenringes 2 und der Druckringe 1 in ihre ungespannte Stellung gemäß oberer Hälfte der Zeichnung gelangen. Das Lösen der Schrumpfscheibe kann beschleunigt werden, indem über die Einlaßbohrung 9 Druckmittel zugeführt wird. Im übrigen ist die axiale Bohrung 11 nicht unbedingt erforderlich; das Druckmittel kann auch über die Einlaßbohrung 9 abgelassen werden.

Zwischen dem bundartigen Zentriervorsprung 4 und den Druckringen 1 ist ein geringes Spiel vorgesehen, um den Durchfluß des Druckmittels zu erleichtern.

Ein am Ende der Habe 13 angeordneter Deckel 12, der über Schrauben 15 mit der Nabe 13 verspannt ist, schließt die Nabe 13 ab und bildet einen Anschlag für die beiden Stücke des Innenringes 2. Der Deckel 12 wirkt so einem Auseinandergleiten des Innenringes 2 beim Verspannen der Druckringe 1 entgegen.

Wie aus der Zeichnung ersichtlich, hat der Innenring 2 an seinen Enden ringförmige Leisten 17, die einem Verkanten des Druckringes 1 entgegenwirken. Die ringförmigen Leisten 17 ermöglichen bei ihrem vergrößerten Außendurchmesser auf einfache Weise eine mechanische Arretierung für die verspannten Druckringe 1, indem durch diese Leisten 17 hindurch axial angeordnete Halteschrauben 18 in Gewindebohrungen in den Druckringen 1 eingeschraubt werden.

## Patentansprüche

1. Hydraulisch beaufschlagbare Schrumpfscheibe für das kraftübertragende Verbinden einer Nabe (13) mit einer Welle (14), mit einem auf einer zylindrischen Außenumfangsfläche der zu verspannenden Nabe (13) angeordneten Innenring (2) und zwei sich axial gegenüberliegenden, auf dem Innenring (2) axial verschieb- und verspannbar geführten Druckringen (1), wobei der Innenring (2) eine doppelkonische Außenumfangsfläche und die zwischen sich einen Druckraum (5) für die Druckflüssigkeit einschließenden Druckringe (1) innere Umfangsflächen aufweisen, die zu den Konusflächen des Innenringes (2) korrespondierend ausgebildet sind, dadurch gekennzeichnet, daß
a) die Druckringe (1) im Querschnitt spiegelbildlich gleich und mit einer zylindrischen Außenumfangsfläche ausgebildet sind, als Druckmittelkanäle (7) dienende Bohrungen aufweisen und innerhalb einer als Widerlager ausgelegten Spannscheibe (3) geführt sind,
b) an der Außenumfangsfläche der Spannscheibe (3) eine Anschlußbohrung (9) für die Druckflüssigkeit vorgesehen ist, die sich an ihrem Bohrungsende innerhalb der Spannscheibe (3) in zwei bezüglich einer Radialebene einen stumpfen Winkel bildende, innerhalb der Spannscheibe (3) verlaufende und an der Innenumfangsfläche der Spannscheibe (3) mündende Druckmittelkanäle (10) teilt,
c) sich die Druckmittelkanäle (7) der Druckringe (1) von der Innenumfangsfläche bis zur Außenumfangsfläche der Druckringe (1) erstrecken und gegenüber einer Radialebene einen Winkel bilden, der zu dem von den Kanälen (10) in der Spannscheibe (3) gebildeten Winkel entgegengesetzt gerichtet ist, wobei die Mündungsöffnungen der Druckmittelkanäle (7) an der Außenumfangsfläche der Druckringe (1) mit den Mündungsöffnungen der Druckmittelkanäle (10) an der Innenumfangsfläche der Spannscheibe (3) korrespondieren, und daß die Druckmittelkanäle (7) die Druckflüssigkeit zu den inneren und äußeren Umfangsflächen der Druckringe (1) und über diese in den Druckraum (5) leiten.

2. Schrumpfscheibe nach Anspruch 1, dadurch gekennzeichnet, daß die axiale Länge der Mündungsöffnungen der von der Anschlußbohrung (9) abzweigenden Druckmittelkanäle (10) im Anschluß und Übergang zu den Druckmittelkanälen (7) in den Druckringen (1) an den axialen Verschiebeweg der Druckringe (1) angepaßt ist.

3. Schrumpfscheibe nach Anspruch 1 oder 2, dadurch gekennzeichnet, daß der Winkel zwischen den Druckmittelkanälen (7) in den Druckringen (1) derart ausgelegt ist, daß die Mündungsöffnungen an der zylindrischen Außenumfangsfläche jedes Druckringes (1) näher zur äußeren Stirnseite des Druckringes (1) als zum Druckraum (5) liegen, und daß die Mündungsöffnungen an der konischen Innenumfangsfläche jedes Druckringes (1) näher zum Druckraum (5) vorgesehen sind.

4. Schrumpfscheibe nbach einem der Ansprüche 1 bis 3, dadurch gekennzeichnet, daß die Mündungsöffnungen der Druckmittelkanäle (7) in den Druckringen (1) als Ringnuten (6) in den Innen- und Außenumfangsflächen gestaltet sind.

5. Schrumpfscheibe nach einem der Ansprüche 1 bis 4, dadurch gekennzeichnet, daß in den Druckringen (1) Dichtungselemente in Form von O-Ringen (16) angeordnet sind.

6. Schrumpfscheibe nach einem der Ansprüche 1 bis 5, dadurch gekennzeichnet, daß die Spannscheibe (3) an ihrer Innenumfangsfläche einen als Bund ausgebildeten Zentriervorsprung (4) aufweist.

7. Schrumpfscheibe nach einem der Ansprüche 1 bis 6, dadurch gekennzeichnet, daß in einem der beiden Druckringe (1) eine axiale Bohrung (11) für die Druckflüssigkeit angeordnet ist, die einerseits in den Druckraum (5) einmündet und andererseits vorzugsweise durch ein Ventil verschließbar ist.

8. Schrumpfscheibe nach einem der Ansprüche 1 bis 7, dadurch gekennzeichnet, daß die Druckringe (1) in ihrer gespannten Stellung zusätzlich durch eine Arretierung gegen ungewolltes Lösen gesichert sind.

9. Schrumpfscheibe nach Anspruch 8, dadurch gekennzeichnet, daß die Arretierung durch ringförmige Leisten (17) an den Enden des Innenringes (2) und axial angeordnete Halteschrauben (18) gebildet ist, die durch die ringförmigen Leisten (17) hindurch in Gewindebohrungen in den Druckringen (1) eingeschraubt sind.

## Claims

1. Hydraulically actuable shrinking ring for the power-transmitting connection of a hub (13) to a shaft (14), with an inner collar (2) arranged on a cylindrical outer peripheral surface of the hub (13) to be clamped, and two pressure collars (1) located axially opposite one another and guided on the inner collar (2) so as to be axially displaceable and clampable, the inner collar (2) having a double-conical outer peripheral surface, and the pressure collars (1), which enclose a pressure space (5) for the pressure fluid between them, having inner peripheral surfaces which are formed so as to correspond to the conical surfaces of the inner collar (2), characterised in that
a) the pressure collars (1) are symmetrical in cross-section and are formed with a cylindrical outer peripheral surface, have boreholes serving as pressure-medium channels (7) and are guided inside a clamping ring (3) designed as an abutment,
b) a connecting borehole (9) for the pressure fluid is provided at the outer peripheral surface of the clamping ring (3), which connecting borehole (9) divides into two pressure-medium channels (10) at its end inside the clamping ring (3), these pressure-medium channels (10) forming an obtuse angle relative to a radial plane, extending inside the clamping ring (3) and opening out at the inner peripheral surface of the clamping ring (3),
c) the pressure-medium channels (7) of the pressure collars (1) extend from the inner peripheral surface to the outer peripheral surface of the pressure collars (1) and form an angle relative to a radial plane which points in the opposite direction to the angle formed by the channels (10) in the clamping ring (3), the outlet openings of the pressure-medium channels (7) at the outer peripheral surface of the pressure collars (1) corresponding to the outlet openings of the pressure-medium channels (10) at the inner peripheral surface of the clamping ring (3), and in that the pressure-medium channels (7) lead the pressure fluid to the inner and outer peripheral surfaces of the pressure collars (1) and via these into the pressure space (5).

2. A shrinking ring according to Claim 1, characterised in that, at the point where the pressure-medium channels (10) branching off from the connecting borehole (9) are connected to and pass over to the pressure-medium channels (7) in the pressure collars (1), the axial length of their outlet openings is adapted to the axial displacement path of the pressure collars (1).

3. A shrinking ring according to Claim 1 or 2, characterised in that the angle between the pressure-medium channels (7) in the pressure collars (1) is such that the outlet openings at the cylindrical outer peripheral surface of each pressure collar (1) are located closer to the outer front face of the pressure collar (1) than to the pressure space (5), and in that the outlet openings at the conical inner peripheral surface of each pressure collar (1) are provided closer to the pressure space (5).

4. A shrinking ring according to any one of Claims 1 to 3, characterised in that the outlet openings of the pressure-medium channels (7) in the pressure collars (1) are formed as annular grooves (6) in the inner and outer peripheral surfaces.

5. A shrinking ring according to any one of Claims 1 to 4, characterised in that sealing elements in the form of O rings (16) are arranged in the pressure collars (1).

6. A shrinking ring according to any one of Claims 1 to 5, characterised in that the inner peripheral surface of the clamping ring (3) has a centering projection (4) formed as a band.

7. A shrinking ring according to any one of Claims 1 to 6, characterised in that an axial borehole (11) for the pressure fluid is arranged in one of the two pressure collars (1), this axial borehole (11) opening out into the pressure space (5) on one side and preferably being closable by a valve on the other side.

8. A shrinking ring according to any one of Claims 1 to 7, characterised in that, in their clamped position, the pressure collars (1) are additionally secured against undesired loosening by a locking device.

9. A shrinking ring according to Claim 8, characterised in that the locking device is formed by annular ridges (17) at the ends of the inner collar (2) and axially arranged holding screws (18), which are screwed through the annular ridges (17) into tapped boreholes in the pressure collars (1).

## Revendications

1. Bague de serrage à actionnement hydraulique pour relier un moyeu (13) à un arbre (14) en transmettant les forces, comprenant une bague intérieure (2) disposée sur une surface cylindrique du pourtour extérieur du moyeu à serrer (13) et deux bagues de pression (1) qui se font face axialement et qui sont guidées sur la bague intérieure (2) en pouvant être déplacées et serrées axialement, cependant que la bague intérieure (2) présente sur son pourtour extérieur une surface en double cône, et que les bagues de pression (1) qui enferment entre elles une chambre de pression (5) destinée au fluide sous pression présentent sur leur pourtour intérieur des surfaces qui sont conformées d'une manière correspondant aux surfaces coniques de la bague intérieure (2), caractérisée par le fait que :
a) Les bagues de pression (1) sont identiques et symétriques en section transversale, elles présentent une surface cylindrique sur leur pourtour extérieur, elles comportent des perçages servant de canaux (7) destinés au fluide sous pression, et elles sont guidées à l'intérieur d'une bague de serrage (3) réalisée sous la forme d'une contre-butée,
b) Il est prévu sur la surface du pourtour extérieur de la bague de serrage (3) un perçage de raccordement (9) qui est destiné au fluide sous pression et qui se divise, à son extrémité de perçage et à l'intérieur de la bague de serrage (3), en deux canaux (10) destinés au fluide sous pression qui forment un angle obtus par rapport à un plan radial, qui s'étendent à l'intérieur de la bague de serrage (3) et qui débouchent sur la surface du pourtour intérieur de la bague de serrage (3),
c) Les canaux (7) destinés au fluide sous pression dans les bagues de pression (1) s'étendent depuis la surface du pourtour intérieur des bagues de pression (1) jusqu'à la surface de leur pourtour extérieur, et ils forment par rapport à un plan radial un angle qui est dirigé à l'opposé de l'angle formé par les canaux (10) ménagés dans la bague de serrage (3), cependant que les ouvertures par lesquelles les canaux (7) destinés au fluide sous pression débouchent sur la surface du pourtour extérieur des bagues de pression (1) correspondent aux ouvertures par lesquelles les canaux (10) destinés au fluide sous pression débouchent sur la surface du pourtour intérieur de la bague de serrage (3), et par le fait que les canaux (7) destinés au fluide sous pression conduisent le fluide sous pression vers les surfaces intérieures et extérieures du pourtour des bagues de pression (1) et, par l'intermédiaire de celles-ci, dans la chambre de pression (5).

2. Bague de serrage selon la revendication 1, caractérisée par le fait que la longueur dans le sens axial des ouvertures par lesquelles débouchent les canaux (10) qui sont destinés au fluide sous pression et qui se ramifient depuis le perçage de raccordement (9) est adaptée au trajet de déplacement axial des bagues de pression (1), en vue du raccordement et de la transition avec les canaux (7) qui sont destinés au fluide sous pression dans les bagues de pression (1).

3. Bague de serrage selon la revendication 1 ou 2, caractérisée par le fait que l'angle entre les canaux (7) destinés au fluide sous pression dans les bagues de pression (1) est calculé d'une manière telle que les ouvertures par lesquelles ils débouchent sur la surface cylindrique du pourtour extérieur de chaque bague de pression (1) soient plus proches du côté frontal extérieur de la bague de pression (1) que de la chambre de pression (5), et que les ouvertures par lesquelles ils débouchent sur la surface conique du pourtour intérieur de chaque bague de pression (1) soient plus proches de la chambre de pression (5).

4. Bague de serrage selon l'une des revendications 1 à 3, caractérisée par le fait que les ouvertures par lesquelles débouchent les canaux (7) destinés au fluide sous pression dans les bagues de pression (1) sont réalisées sous la forme de nervures annulaires (6) ménagées dans les surfaces des pourtours intérieurs et extérieurs.

5. Bague de serrage selon l'une des revendications 1 à 4, caractérisée par le fait que des éléments d'étanchéité sous la forme de joints toriques (16) sont disposés dans les bagues de pression (1).

6. Bague de serrage selon l'une des revendications 1 à 5, caractérisée par le fait que la bague de serrage (3) présente sur la surface de son pourtour intérieur une saillie de centrage (4) réalisée sous la forme d'un collet.

7. Bague de serrage selon l'une des revendications 1 à 6, caractérisée par le fait qu'est disposé dans l'une des deux bagues de pression (1) un perçage axial (11) qui est destiné au fluide sous pression, qui débouche dans la chambre de pression (5), d'une part, et qui, d'autre part, peut être fermé de préférence par une soupape.

8. Bague de serrage selon l'une des revendications 1 à 7, caractérisée par le fait qu'un dispositif de blocage empêche en outre les bagues de pression (1) de se desserrer involontairement lorsqu'elles sont dans leur position serrée.

9. Bague de serrage selon la revendication 8, caractérisée par le fait que le dispositif de blocage est constitué par des nervures annulaires (17) présentes sur les extrémités de la bague intérieure (2) et par des vis de maintien (18) disposées axialement qui sont vissées, en traversant les nervures annulaires (17), dans des perçages filetés ménagés dans les bagues de pression (1).
